# EUROPÄISCHE PATENTSCHRIFT

(11) **EP 0 652 416 B1**
(45) Veröffentlichungstag und Bekanntmachung des Hinweises auf die Patenterteilung: **30.07.1997**
(21) Anmeldenummer: 94114257.2
(22) Anmeldetag: 10.09.1994
(51) Int. Cl.: G01C 19/28, G01C 19/42

(54) **Zweiachsiger Wendekreisel mit federnden Gelenkteilen**
Two axis rate gyroscope with flexible articulated parts
Gyroscope à deux axes comportant des parties articulées flexibles

(30) Priorität: 10.11.1993 DE 4338279
(43) Veröffentlichungstag der Anmeldung: 10.05.1995
(73) Patentinhaber: Daimler-Benz Aerospace Aktiengesellschaft, 81663 München (DE)
(72) Erfinder: Gruber, Ernst, D-81735 München (DE); Becker, Hendrik, D-83624 Otterfing (DE)

(56) Entgegenhaltungen:
- DE-A- 3 519 891
- DE-A- 3 619 941
- US-A- 4 339 959
- US-A- 4 891 997

## Beschreibung

Die Erfindung betrifft einen zweiachsigen Wendekreisel (30) mit federnden Gelenkteilen, gemäß Patentanspruch 1.

Durch die DE 36 19 941 A1 ist ein Winkelgeschwindigkeitssensor für Navigationszwecke mit einem rotierenden Kreiselelement bekannt, welches mittels eines hebelartig wirkenden piezoelektrischen Kristalls mechanisch gefesselt ist. Beim Auftreten einer Winkelgeschwindigkeit um eine zur Laufachse des Gerätes senkrechte Achse wird der hebelartige piezoelektrische Kristall verbogen, wobei er ein elektrisches Signal liefert. Bei diesem Kreisel ist die Länge des piezoelektrischen Kristalls gegenüber seiner Einspannung groß, wodurch bei Beanspruchung durch die Winkelgeschwindigkeit verhältnismäßig große Meßauslenkungen erfolgen. Somit hat der Kreisel keine sehr steife Fesselung, eine große Nichtlinearität der Meßauslenkung und relativ große von der Meßauslenkung abhängige Kopplungsfehler.

Der Erfindung liegt die Aufgabe zugrunde, federnde Gelenkteile für einen zweiachsigen Wendekreisel zu schaffen, die eine sehr steife Fesselung des Kreisels und somit kleinste linare Meßauslenkungen gewährleisten.

Diese Aufgabe wird durch die im Patentanspruch 1 gekennzeichneten Merkmale gelöst. Vorteilhafte Ausgestaltungen der Erfindung sind in den abhängigen Patentansprüchen gekennzeichnet.

Der wesentliche Vorteil der erfindungsgemäßen Gelenkteile mit den quasi starren Federelementen besteht in der dadurch erreichten steifen Fesselung des Kreisels. Dadurch erfolgen nur sehr kleine Meßauslenkungen mit einer minimalen Linearitätsabweichung und zu vernachlässigendem Kopplungsfehler über den gesamten Meßbereich. Alle diese Eigenschaften ergeben eine hohe Dynamik des Kreisels, worunter das Verhältnis von Meßbereich zur Auflösung bzw. Anspruchempflindlichkeit verstanden wird. Es wird damit eine Dynamik von 1/10000 und mehr erreicht, entsprechend z.B. einem Meßbereich von 1000°/sec zu 0,01°/sec Auflösung. Besonders die Ausführung mit den als Dehnschrauben ausgebildeten Federelementen hat den Vorteil einer einfachen kompakten Bauweise mit konventionellen, marktüblichen Feder- und Kraftelementen.

Weitere Vorteile können der Erläuterung der nachstehend in der Zeichnung dargestellten Ausführungsbeispiele entnommen werden. Es zeigen:
- Fig. 1: einen Schnitt durch federnde Gelenkteile, in denen kraftmessende Elemente und zwei Ausführungsformen von Federelementen eingesetzt sind;
- Fig. 2: einen Schnitt durch die federnden Gelenkteile nach Fig. 1 in Richtung der Pfeile II-II unter Fortlassung der kraftmessenden Elemente und der Federelemente;
- Fig. 3: einen Schnitt durch einen zweiachsigen Wendekreisel mit den federnden Gelenkteilen und
- Fig. 4: einen Schnitt durch die federnden Gelenkteile mit einer anderen Ausführungsform für die kraftmessenden Elemente und die Federelemente.

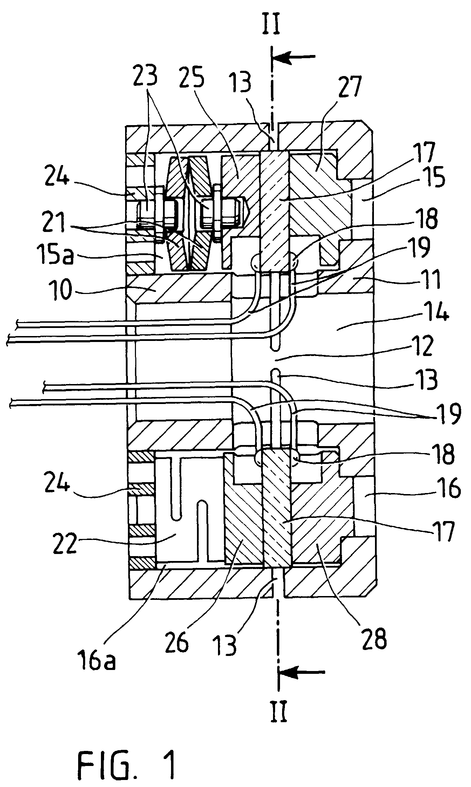

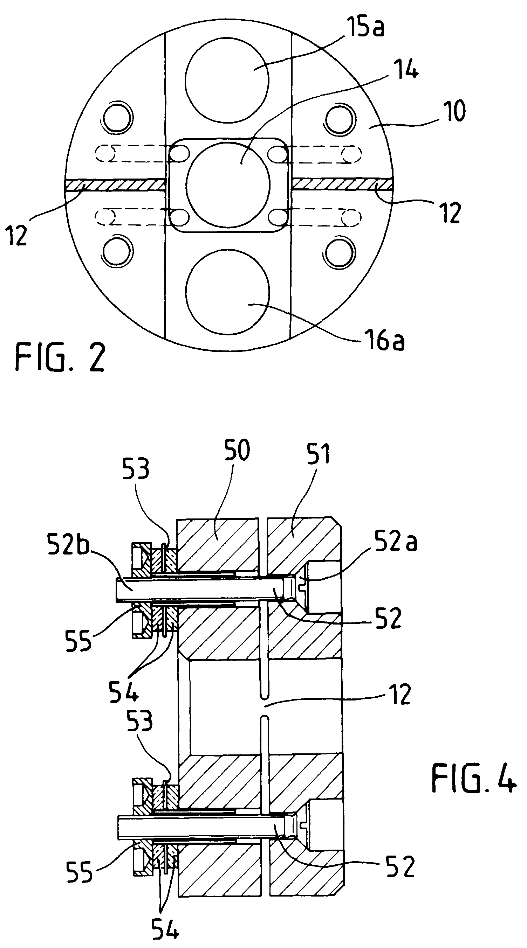

Aus der Fig. 1 sind zwei runde Gelenkteile 10 und 11 ersichtlich, die außer einem Steg 12 (siehe auch Fig. 2) durch Schlitze 13 voneinander getrennt sind. Durch beide Gelenkteile 10 und 11 geht eine Mittelbohrung 14, durch die eine hier nicht dargestellte Antriebswelle für einen Wendekreisel führt. Oben und unten sind noch weitere durchgehende Bohrungen 15 und 16 vorhanden, in die in die Schlitze 13 und seitlich derselben als kraftmessende Elemente Quarze 17 eingesetzt sind. An die Quarze 17 sind mit Lötpunkten 18 elektrische Leitungen 19 angeschlossen, durch die die in den Quarzen 17 erzeugten Meßsignale weitergeleitet werden. In der Fig. 1 sind in dem ersten Gelenkteil 10 zwei Ausführungsformen von Federelementen dargestellt. Oben in der Bohrung 15a ist eine Tellerfeder 21 und unten in der Bohrung 16a ist eine spezielle Druckfeder 22 ersichtlich. Die Tellerfeder 21 wird durch Zentrierbolzen 23 zentriert. Beide Federn 21 und 22 werden durch Abstimmscheiben 24 gegen Druckstücke 25 und 26 gedrückt, die wiederum die Kräfte der Federn 21 und 22 auf die Quarze 17 übertragen, die sich wiederum durch Druckstücke 27 und 28 gegen das zweite Gelenkteil 11 abstützen. In Fig. 2 sind die Quarze und die Federn fortgelassen und sind somit im wesentlichen nur das erste Gelenkteil 10, der Steg 12 und die Bohrungen 14, 15a und 16a ersichtlich.

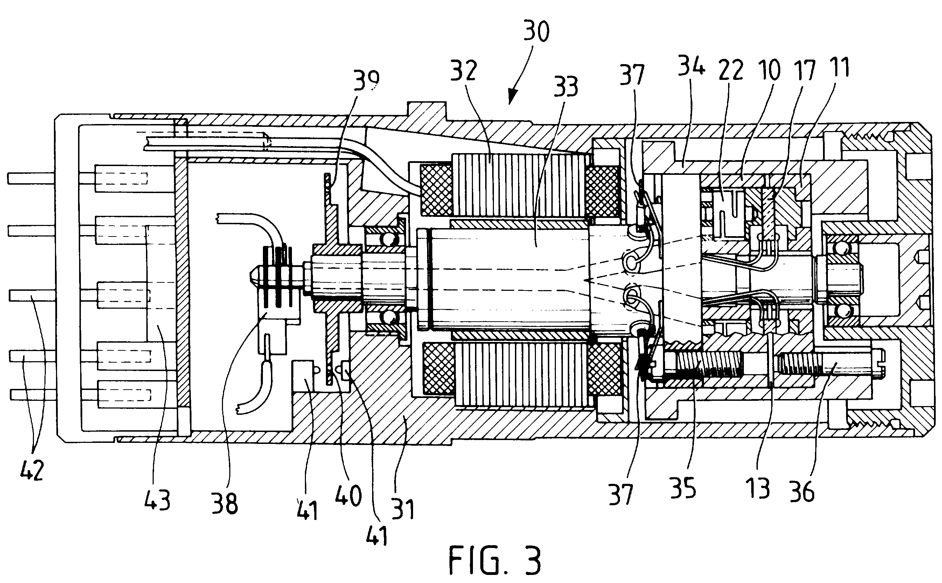

Fig. 3 zeigt einen Schnitt durch einen zweiachsigen Wendekreisel 30, in dem die Gelenkteile 10 und 11 eingebaut sind. Hierbei sind in das Gelenkteil 10 die Druckfedern 22 eingesetzt. Der Wendekreisel 30 besteht im wesentlichen aus in einem Gehäuse 31 eingebauten Synchronmotor 32, einer Antriebswelle 33 und einem Kreiselläufer 34. Das Gelenkteil 10 ist durch Schrauben 35, von denen eine dargestellt ist, mit der Antriebswelle 33 und das Gelenkteil 11 durch Schrauben 36 mit dem Kreiselläufer 34 verbunden. Weitere wichtige Teile des Wendekreisels 30 sind: Lotstützpunkte 37 zur Verbindung der elektrischen Anschlüsse von den Quarzen 17 zu einem Schleifringübertrager 38, eine Impulsscheibe 39, die einen Schlitz 40 aufweist für eine Lichtschranke 41 zum Erzeugen eines Winkel-Referenz-Signals, einen Signal-Vorverstärker 43 und nach außen führende Kontaktstifte 42 zu einer elektrischen Schnittstelle.

Die Funktionsweise des rotierenden Wendekreisels 30 ist folgendermaßen: Die im Meßbetrieb des Kreisels mit der Drehfrequenz der Antriebswelle 33 sinusförmig auftretenden Präzessionsmomente bewirken eine wechselnde Druckbelastung auf die Quarze 17. Diese erzeugen elektrische Signale, welche den Druckbelastungen bzw. den Präzessionsmomenten und somit der Meßgröße des Wendekreisels (Eingangsdrehrate) proportional sind. Die Quarze 17 sind dabei durch das Anschrauben des Gelenkteiles 10 an die Antriebswelle 33 mittels der Federn 21 oder 22 gegen die durch den Steg 12 gebildete Gelenkfeder verspannt, wodurch sie sich in einem definierten Arbeitsbereich befinden. Der Steg 12 wird hierbei auf Zug beansprucht und stellt ein Federgelenk mit sehr hoher Steifigkeit dar. In einer nachgeschalteten Auswerteelektronik wird ein Gleichspannungssignal erzeugt und die Zuordnung der beiden Meßachsen bestimmt. Dazu wird mittels des Impulsabgriffs 41 zwischen der Antriebswelle 33 und dem Gehäuse 31 der Winkelreferenzimpuls erzeugt.

Fig. 4 stellt eine andere Ausführungsform in der Anordnung sowohl der kraftmessenden Elemente als auch der Federelemente dar. Gelenkteile 50 und 51 haben wie bei der Ausführung nach den Fig. 1 und 2 einen gemeinsamen Steg 12, wodurch sie ebenfalls ein Federgelenk von hoher Steifigkeit darstellen. Die Federelemente sind als Dehnschrauben 52 ausgeführt, die mit ihren Köpfen 52a im zweiten Gelenkteil 51 eingelassen und deren Schäfte 52b durch den ersten Gelenkteil 51 hindurchgeführt sind.Als Kraftmeßelemente sind zwei durch ein Kontaktblech 53 getrennte Piezokeramiken 54 vorhanden. Durch Muttern 55, die auf den Dehnschrauben 52 sitzen, werden die Piezokeramiken 54 gegen das Gelenkteil 50 gedrückt und die Dehnschrauben 52 definiert vorgespannt. Somit werden die Piezokeramiken 54 mittels der Dehnschrauben 52 gegen die durch die beiden Gelenkteile 50 und 51 gebildete Gelenkfeder verspannt. Dabei wird der Steg 12 auf Druck beansprucht. Dieses macht jedoch keinen Unterschied zu der Zugbeanspruchung in der Anwendung bezüglich der Güte der Meßeinrichtung. Die Dehnschrauben 52 arbeiten bei Belastung durch die Präzessionsmomente im Wechselspiel entsprechend den wechselnd auftretenden Kräften, wobei abwechselnd eine belastet und die andere entlastet wird.

## Patentansprüche

1. Zweiachsiger Wendekreisel (30) mit zwei achsial hintereinander angeordneten Gelenkteilen (10, 11, 50, 51), von denen der erste Gelenkteil (10, 50) mit einer Antriebswelle (33) des Wendekreisels (30) und der zweite Gelenkteil (11, 51) mit einem Kreiselläufer (34) verbunden sind, wobei die beiden Gelenkteile (10, 11, 50, 51) durch zwei schmale seitlich einer Mittelbohrung (14) und senkrecht zur Mittelachse der Gelenkteile (10, 11, 50, 51) angeordnete Stege (12) miteinander verbunden sind und mittels Federelementen (21, 22, 52), die auf vorgespannte kraftmessende Elemente (17, 54) einwirken, gegeneinander verspannt sind, und wobei die Federelemente (21, 22, 52) beim Einwirken eines sinusförmig wechselnden Drehmomentes sich symmetrisch um die Stege (12) elastisch verformen, wodurch die kraftmessenden Elemente (17, 54) wechselweise be- und entlastet werden und entsprechend den einwirkenden Kräften proportionale Meßsignale erzeugen.

2. Wendekreisel nach Anspruch 1, wobei die Gelenkteile (10, 11, 50, 51) rund sind und mit zwei diametralen Federelementen (21, 22, 52) und kraftmessenden Elementen (17, 54) versehen sind.

3. Wendekreisel nach einem der Ansprüche 1 oder 2, wobei die Federelemente aus Tellerfedern (21) bestehen.

4. Wendekreisel nach einem der Ansprüche 1 oder 2, wobei die Federelemente aus Druckfedern (22) bestehen.

5. Wendekreisel nach einem der Ansprüche 1 oder 2, wobei die Federelemente aus Dehnschrauben (52) bestehen.

6. Wendekreisel nach einem der Ansprüche 1 oder 2, wobei die kraftmessenden Elemente aus Quarzen (17, 54) bestehen

7. Wendekreisel nach einem der Ansprüche 1 oder 2, wobei die kraftmessenden Elemente aus Piezokeramiken (17,54) bestehen.

8. Wendekreisel nach einem der Ansprüche 2 oder 3, wobei die Tellerfedern (21) oder Druckfedern (22) sowie die kraftmessenden Elemente (17, 54) hintereinander in Bohrungen (15, 15a, 16, 16a) der beiden Gelenkteile (10, 11) angeordnet sind, wobei die Tellerfedern (21) oder Druckfedern (22) im ersten Gelenkteil (10) und die kraftmessenden Elemente (17, 54) zwischen den Gelenkteilen (10,11) im Bereich von zwischen den Gelenkteilen (10, 11) vorhandenen Schlitze (13) eingebaut sind.

9. Wendekreisel nach Anspruch 5, wobei die Dehnschrauben (52) mit ihren Köpfen (52a) im zweiten Gelenkteil (51) sitzen und ihre Schäfte (52b) durch den ersten Gelenkteil (50) hindurchgeführt sind, und daß die kraftmessenden Elemente (17, 54) außen auf den Schäften (52b) angeordnet sind, wobei sie mit Muttern (55) gegen den ersten Gelenkteil (50) vorgespannt anliegen.

10. Wendekreisel nach Anspruch 9, wobei zwei durch ein Kontaktblech (53) elektrisch verbundene und parallel geschaltete kraftmessende Elemente (54) auf die Dehnschrauben (52) gesetzt sind, wobei die Kontaktbleche (52) über Leitungen (19) mit einem Schleifringüberträger (3) verbunden sind.

11. Wendekreisel nach einem der Ansprüche 1 bis 10, wobei Lötpunkte (18) außen an den kraftmessenden Elementen (17, 54) angebracht sind, die über Leitungen (19) die kraftmessenden Elemente (17, 54) mit einem Schleifringübertrager (38) verbinden.

12. Wendekreisel nach Anspruch 1, wobei mittels einer mit einem Schlitz (40) versehenen Impulsschelbe (39) und einer Llchtschranke (41) ein Winkel-Referenzsignal für eine nachgeschaltete Auswerteelektronik erzeugbar ist.

## Claims

1. Two axis rate gyroscope (30) with two articulated parts (10, 11, 50, 51) arranged axially behind each other, of which the first articulated part (10, 50) is connected to a driveshaft (33) of the gyroscope (30), and the second articulated part (11, 51) is connected to a gyro rotor (34), and both articulated parts (10, 11, 50, 51) are joined by two narrow webs (12) arranged at the side of a centre bore (14) and vertically to the centre axis of the articulated parts (10, 11, 50, 51) and tensioned towards each other by means of spring elements (21, 22, 52) which act on pretensioned load measuring elements (17, 54), and the spring elements (21, 22, 52) elastically deform symmetrically around the webs (12) under the effect of a sinusoidally changing torque, and the load measuring elements (17, 54) are alternatedly loaded and unloaded and produce proportional measuring signals to correspond with the effective loads.

2. Gyroscope according to Claim 1, with the articulated parts (10, 11, 50, 51) being round and provided with two diametrical spring elements (21, 22, 52) and load measuring elements (17, 54).

3. Gyroscope according to one of Claims 1 or 2, with spring elements composed of cup springs (21).

4. Gyroscope according to one of Claims 1 or 2, with spring elements composed of pressure springs (22).

5. Gyroscope according to one of Claims 1 or 2, with spring elements composed of expansion bolts (52).

6. Gyroscope according to one of Claims 1 or 2, with load measuring elements composed of quartzes (17, 54).

7. Gyroscope according to one of Claims 1 or 2, with load measuring elements composed of piezo ceramics (17, 54).

8. Gyroscope according to one of Claims 2 or 3, with cup springs (21) or pressure springs (22) as well as the load measuring elements (17, 54) arranged one behind the other in bores (15, 15a, 16, 16a) of both articulated parts (10, 11), and the cup springs (21) or pressure springs (22) are mounted in the first articulated part (10) and the load measuring elements (17, 54) are mounted between the articulated parts (10, 11) in the area of slots (13) located between the articulated parts (10, 11).

9. Gyroscope according to Claim 5, with expansion bolts (52) seated with their heads (52a) in the second articulated part (51) and their shafts (52b) passed through the first articulated part (50), and the load measuring elements (17, 54) are arranged externally on the shafts (52b) and abut under pretension with nuts (55) against the first articulated part (50).

10. Gyroscope according to Claim 9, with two load measuring elements (54). which are electrically connected by a contact plate (53) and switched in parallel, are seated on the expansion bolts (52), and the contact plates (52) are connected by means of conductors (19) to a slip ring transmitter (3).

11. Gyroscope according to one of Claims 1 to 10, with soldering points (18) applied externally on the load measuring elements (17, 54) which connect the load measuring elements (17, 54) and a slip ring transmitter (38) by means of conductors (19).

12. Gyroscope according to Claim 1, with an angle reference signal for a downstream evaluation electronics being generated by means of an pulse disc (39), which is provided with a slot (40), and a light barrier (41).

## Revendications

1. Gyroscope deux axes (30) avec deux éléments d'articulation (10, 11, 50, 51) disposés axialement l'un derrière l'autre, parmi lesquels le premier élément d'articulation (10, 50) est lié à un arbre d'entraînement (32) du gyroscope (30) et le second élément d'articulation (11, 51) est lié à une toupie (34) de gyroscope, les deux éléments d'articulation (10, 11, 50, 51) étant liés l'un à l'autre par deux barrettes (12) étroites qui sont disposées sur le côté d'un trou central (14), perpendiculairement à l'axe médian des éléments d'articulation (10, 11, 50, 51), et étant serrés l'un contre l'autre à l'aide d'éléments élastiques (21, 22, 52) qui agissent sur des éléments (17, 54) précontraints de mesure de force et les éléments élastiques (21, 22, 52), sous l'action d'un couple qui varie suivant une sinusoïde, se déformant élastiquement, de manière symétrique, autour des barrettes (12), avec pour effet que les éléments (17, 54) de mesure de force sont alternativement chargés et déchargés et produisent des signaux de mesure proportionnels aux forces qui agissent.

2. Gyroscope selon la revendication 1, dans lequel les éléments d'articulation (10, 11, 50, 51) sont ronds et sont pourvus de deux éléments élastiques (21, 22, 52) diamétraux et d'éléments (17, 54) de mesure de force.

3. Gyroscope selon l'une des revendications 1 ou 2, dans lequel les éléments élastiques sont des rondelles-ressorts (21).

4. Gyroscope selon l'une des revendications 1 ou 2, dans lequel les éléments élastiques sont des ressorts de compression (22).

5. Gyroscope selon l'une des revendications 1 ou 2, dans lequel les éléments élastiques sont des vis (52) à tige élastique.

6. Gyroscope selon l'une des revendications 1 ou 2, dans lequel les éléments de mesure de force sont des quartz (17, 54).

7. Gyroscope selon l'une des revendications 1 ou 2, dans lequel les éléments de mesure de force sont des piézo-céramiques (17, 54).

8. Gyroscope selon l'une des revendications 2 ou 3, dans lequel les rondelles-ressorts (21), les ressorts de compression (22) et les éléments (17, 54) de mesure de force sont disposés les uns à la suite des autres dans des trous (15, 15a, 16, 16a) dans les deux éléments d'articulation (10, 11), les rondelles élastiques (21), les ressorts de compression (22) étant montés dans le premier élément d'articulation (10) et les élémcnts de mesure de force (17, 54) étant montés entre les éléments d'articulation (10, 11), dans la région de fentes (13) prévues entre les éléments d'articulation (10, 11).

9. Gyroscope selon la revendication 5, dans lequel les vis (52) à tige élastique sont montées de telle sorte que leur tête (52a) est logée dans le second élément d'articulation (51) et que les tiges (52b) des vis traversent le premier élément d'articulation (50) et dans lequel les éléments (17, 54) de mesure de force sont disposés extérieurement sur les tiges (52b) des vis et sont appliqués avec précontrainte au moyen d'écrous (55) contre le premier élément d'articulation (50).

10. Gyroscope selon la revendication 9, dans lequcl deux éléments (54) de mesure de force liés électriquement par une tôle de contact (53) et connectés en parallèle sont montés sur les vis (52) à tige élastique, les tôles de contact (52) étant reliés par des conducteurs (19) à un transmetteur (3) à pistes de contact.

11. Gyroscope selon l'une des revendications 1 à 10, dans lequel des points de soudure (18) sont appliqués extérieurement sur les éléments (17, 54) de mesure de force, lesquels points de soudure relient les éléments (17, 54) de mesure de force à un transmetteur (38) à pistes de contact par l'intermédiaire de conducteurs (18).

12. Gyroscope selon la revendication 1, dans lequel un signal angulaire de référence pour une électronique de traitement associée peut être généré au moyen d'un disque (39) de génération d'impulsions pourvu d'une fente (40) et d'un barrage photoélectrique (41).
